(19) Europäisches Patentamt
European Patent Office
Office européen des brevets

(11) EP 0 683 203 B1

(12) EUROPÄISCHE PATENTSCHRIFT

(45) Veröffentlichungstag und Bekanntmachung des Hinweises auf die Patenterteilung:
**16.07.1997 Patentblatt 1997/29**

(51) Int Cl.$^6$: **C08L 21/00**, C08K 5/54, C08K 5/31

(21) Anmeldenummer: **95106800.6**

(22) Anmeldetag: **05.05.1995**

(54) **Kieselsäure-gefüllte Kautschukmischungen mit verbesserter Vulkanisationskinetik**

Silica reinforced rubber compositions with improved vulcanisation kinetics

Composition de caoutchouc renforcé de silice ayant une cinétique de vulcanisation améliorée

(84) Benannte Vertragsstaaten:
**BE DE FR GB IT**

(30) Priorität: **18.05.1994 DE 4417354**

(43) Veröffentlichungstag der Anmeldung:
**22.11.1995 Patentblatt 1995/47**

(73) Patentinhaber: **BAYER AG**
**51368 Leverkusen (DE)**

(72) Erfinder:
- **Scholl, Thomas, Dr.**
  **D-51469 Bergisch Gladbach (DE)**
- **Weidenhaupt, Hermann-Josef, Dr.**
  **D-52388 Nörvenich (DE)**

(56) Entgegenhaltungen:
**EP-A- 0 447 066**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 683 203 B1

## Beschreibung

Die vorliegende Erfindung betrifft Kieselsäure-gefüllte Kautschukmischungen, die neben Kautschuk, Kieselsäure enthaltende Füllstoffe, Vernetzungsmittel, gegebenenfalls weitere Kautschukhilfsmittel enthalten sowie spezielle Mercaptoalkyl-silylether und Guanidine. Die erfindungsgemäßen Kautschukmischungen dienen zur Herstellung von Kautschukmischungen, die sich durch ein verbessertes Vulkanisationsverhalten auszeichnen, insbesondere durch eine schnellere Ausvulkanisation und einen langen Verarbeitungszeitraum bei höherer Temperatur.

Kieselsäure-gefüllte Kautschukvulkanisate unterscheiden sich bekanntermaßen in ihrem Vernetzungsverhalten deutlich von Ruß-gefüllten Kautschukmischungen: Die Ausvulkanisation ist stark verzögert und die Vernetzungsdichte für eine Anwendung zu gering. Daher ist in der Regel die Zugabe eines Aktivators, wie z.B. eines Mercapto-propylsilylethers oder Bis(trialkoxysilylpropyl)-tetrasulfids erforderlich. Mercaptopropyl-silylether besitzen dagegen die unangenehme Eigenschaft, die Verarbeitungszeit der Kautschukmischungen unter Verarbeitungsbedingungen zu stark herabzusetzen, so daß sie nur in besonderen Fällen, in denen ein langer Verarbeitungszeitraum keine Rolle spielt (technische Gummiartikel, keine Reifen), verwendet werden können (siehe hierzu die Vergleichsversuche in DE 2 255 577). Bis-(trialkoxysilylpropyl)-tetrasulfid (DE 2 255 577) hat dagegen den Nachteil, daß die Ausvulkanisation sehr lange dauert und daher lange Fertigungszeiten in Kauf genommen werden müssen (siehe Vergleichsbeispiel der vorliegenden Anmeldung). Die Kombination mit einer Verbindung der Struktur (II) führt hier nur zu einer unerwünschten Verkürzung der Anvulkanisation, während die Ausvulkanisation eher verlängert wird.

In EP 447 066 werden spezielle Kieselsäure-gefüllte Kautschukmischungen beschrieben, die u.a. ein spezielles Silan enthalten. Über die Vulkanisationskinetik und die Herstellung der Verbindung werden in der EP 447 066 keine Angaben gemacht. Die dort angegebenen Verbindungen verkürzen nach eigenen Versuchen die Anvulkanisation und sind daher technisch für viele Anwendungen, bei denen es auf Verarbeitungssicherheit ankommt, nicht brauchbar.

In DE 42 33 197 werden bestimmte Benzthiazolderivate als Vulkanisationsbeschleuniger beschrieben, die bereits eine bessere Wirksamkeit als herkömmliche Vulkanisationsbeschleuniger in Kieselsäure-gefüllten Kautschuken aufweisen, die aber noch keine wesentliche Verbesserung hinsichtlich Modul und Abriebwiderstand beim Reifen hervorrufen.

Es besteht daher nach wie vor ein Bedarf an Kautschukmischungen, insbesondere Kieselsäure-gefüllte Kautschukmischungen, die eine gute Vulkanisationskinetik aufweisen und die nach der Vulkanisation Kautschukartikel, insbesondere Reifen, ergeben, die u.a. einen guten Modul und einen hohen Abriebswiderstand aufweisen.

Gegenstand der vorliegenden Erfindung sind daher Kautschukmischungen enthaltend mindestens einen Kautschuk, einen Vernetzer, einen Kieselsäure enthaltenden Füllstoff, gegebenenfalls weitere Kautschukhilfsmittel sowie mindestens eine der Verbindungen der Formel (I) und (II)

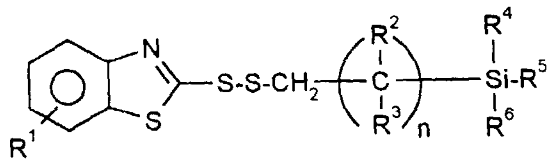

(I),

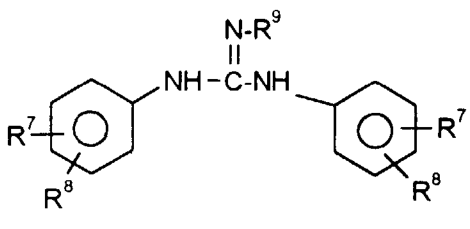

(II),

worin

| | |
|---|---|
| $R^1$ | Wasserstoff oder $C_1$-$C_8$-Alkyl, bevorzugt $C_1$-$C_4$-Alkyl bedeutet, |
| $R^2$ und $R^3$ | gleich oder verschieden sind und für Wasserstoff, $C_1$-$C_{12}$-, bevorzugt $C_1$-$C_6$-Alkyl, -Alkenyl oder -Cycloalkyl oder $C_6$-$C_{12}$-, bevorzugt $C_6$-$C_{10}$-Aryl, die gegebenenfalls mit Hydroxyl-, Carboxyl- oder Carboxy-$C_1$-$C_8$-alkylresten ein- oder mehrfach substituiert sein können, stehen, |

$R^4$, $R^5$ und $R^6$ gleich oder verschieden sind und $C_1$-$C_{18}$-, bevorzugt $C_1$-$C_6$-Alkyl, -Alkenyl oder -Cycloalkyl, O-$C_1$-$C_{12}$-, bevorzugt O-$C_1$-$C_6$-Alkyl, O-$C_6$-$C_{12}$-, bevorzugt O-$C_6$-$C_{10}$-Aryl, die durch O-$C_1$-$C_8$-Alkylreste ein- oder mehrfach substituiert sein können, bedeuten, mit der Maßgabe, daß mindestens einer der Reste $R^4$, $R^5$ und $R^6$ eine O-$C_1$-$C_{12}$-Alkyl- oder O-$C_6$-$C_{12}$-Arylgruppe darstellt,

n für eine ganze Zahl von 0 bis 8, bevorzugt 0 bis 4 steht,

$R^7$, $R^8$ und $R^9$ gleich oder verschieden sind und Wasserstoff, $C_1$-$C_{12}$-, bevorzugt $C_1$-$C_6$-Alkyl oder $C_6$-$C_{12}$-, bevorzugt $C_6$-$C_{10}$-Aryl bedeuten,

wobei die Verbindung (I) in Mengen von 0,1 bis 15 Gew.-% und die Verbindung (II) in Mengen von 0,05 bis 5 Gew.-%, bezogen auf die Menge des jeweils eingesetzten Kautschuks, eingesetzt wird.

Bevorzugt wird die Verbindung (I) in Mengen von 0,3 bis 7 Gew.-% und die Verbindung (II) in Mengen von 0,1 bis 3 Gew.-% eingesetzt.

Als Alkylreste für die obengenannten Formeln werden insbesondere genannt:
Methyl, Ethyl, Propyl, Butyl, Hexyl, Oktyl.

Als Alkenylreste:
Propenyl, Butenyl, Norbornenyl.

Als Cycloalkylreste:
Cyclophenyl, Cyclohexyl, Methylcyclohexyl.

Als gegebenenfalls substituierte Arylreste:
Phenyl, Methylphenyl, tert.-Butylphenyl, Diphenyl.

Als O-Alkylreste:
Methoxi, Ethoxi, n-Propoxi, i-Propoxi, n-Butoxi, i-Butoxi, Amyloxi, n-Hexyloxi, Cyclohexyloxi, n-Octoxi, i-Octoxi, Dodecyloxi.

Als O-Arylreste, die gegebenenfalls substituiert sein können:
Phenoxi, Methylphenoxi, tert.-Butylphenoxi, Diphenyloxi.

Bevorzugte Vertreter der Verbindungen der Formel (I) sind:

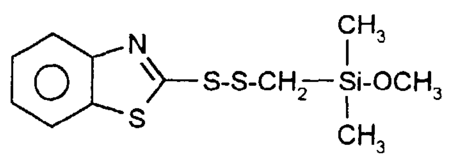

(III)

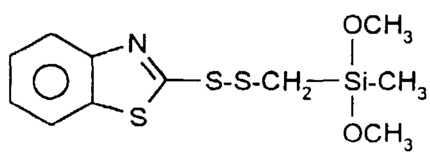

(IV)

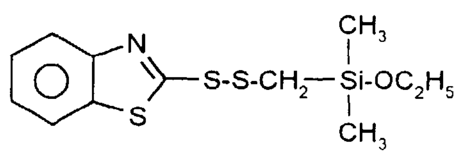

(V)

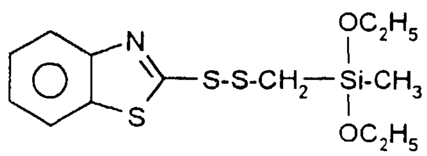

(VI)

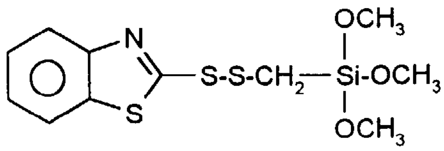

(VII)

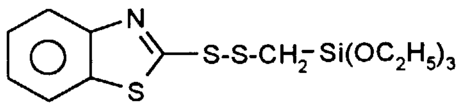

(VIII)

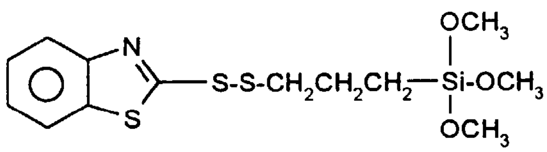

(IX)

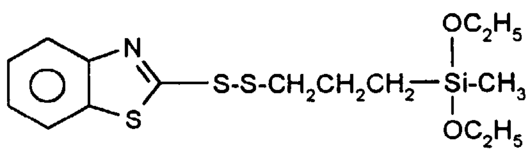

(X)

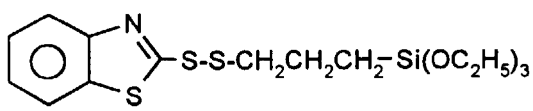

(XI)

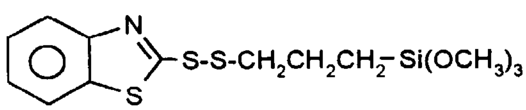

(XII)

Bevorzugte Vertreter der Verbindungen der Formel (II) sind:

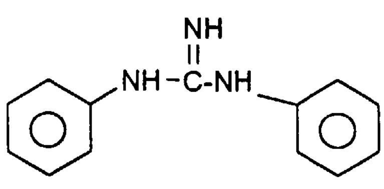

(XIII)

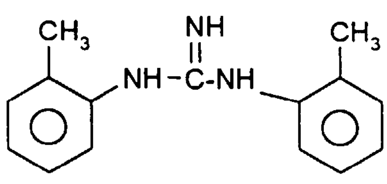

(XIV)

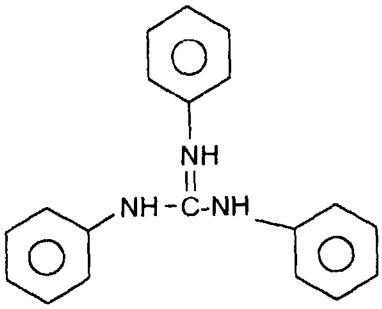

(XV)

Die Verbindungen der Formel (I) können nach bekannter Art und Weise hergestellt werden:

1. Umsetzung von Mercaptobenzthiazol-sulfenchloriden mit entsprechenden Mercaptoalkylsulfanen. Derartige Reaktionen sind z.B. beschrieben in Houben-Weyl, Methoden der organischen Chemie, Thieme Verlag Stuttgart, Band E 11, Seite 140 bis 142 (1985).

2. Aus Thioimiden, durch Umsetzung mit entsprechenden Mercaptoalkyl-silanen. Dieser Reaktionstyp ist z.B. beschrieben in Tetrahedron Letters 41 (1970), 3551 bis 3554.

3. Durch Umsetzung von 2,2'-Dithiobisbenzthiazol mit Mercaptanen. Derartige Umsetzungen sind z.B. beschrieben in Houben-Weyl, Methoden der organischen Chemie, Thieme Verlag Stuttgart, Band E 11, Seite 146 (1985).

Die Verbindungen der Formel (II) und ihre Herstellung sind im Prinzip bekannt (siehe z.B. Ullmanns Encyklopädie der technischen Chemie, 4. Auflage 1976, Band 12, Seiten 416-417, Verlag Chemie, Weinheim). Geeignete Vertreter sind beispielsweise Diphenylguanidin, Di-o-tolylguanidin und Triphenylguanidin.

Bei der Herstellung der erfindungsgemäßen Kautschukmischungen erfolgt die Zugabe der erfindungsgemäßen Additive der Formel (I) sowie die Zugabe der Füllstoffe bevorzugt im ersten Teil des Mischprozesses bei Massetemperaturen von 100 bis 200°C, sie kann jedoch auch später bei tieferen Temperaturen (ca. 40 bis 100°C) z.B. zusammen mit Schwefel und den Beschleunigern erfolgen. Die Zugabe der Additive der Formel (II) erfolgt bevorzugt im zweiten Teil des Mischprozesses (bei ca. 40 bis 100°C).

Die erfindungsgemäßen Verbindungen der Formel (I) und (II) können sowohl in reiner Form als auch aufgezogen auf einen inerten, organischen oder anorganischen Träger dem Mischprozeß zugegeben werden. Bevorzugte Trägermaterialien sind Kieselsäuren, natürliche oder synthetische Silikate, Aluminiumoxid oder Ruße.

Als Füllstoffe kommen für die erfindungsgemäßen Kautschukmischungen in Frage:

- hochdisperse Kieselsäuren, hergestellt z.B. durch Fällung von Lösungen von Silikaten oder Flammenhydrolyse von Siliciumhalogeniden mit spezifischen Oberflächen von 5 bis 1000, vorzugsweise 20 bis 400 $m^2/g$ (BET-Oberfläche) und mit Primärteilchengrößen von 100 bis 400 nm. Die Kieselsäuren können gegebenenfalls auch als Mischoxide mit anderen Metalloxiden, wie Al-, Mg-, Ca-, Ba-, Zn-, Zr-, Ti-oxiden, vorliegen.

- Synthetische Silikate, wie Aluminiumsilikat, Erdalkalisilikate, wie Magnesiumsilikat oder Calciumsilikat, mit BET-Oberflächen von 20 bis 400 $m^2/g$ und Primärteilchendurchmessern von 10 bis 400 nm.

- Natürliche Silikate, wie Kaolin und andere natürlich vorkommende Kieselsäuren.

- Glasfasern und Glasfaserprodukte (Matten, Stränge) oder Mikroglaskugeln.

Bevorzugt werden hochdisperse Kieselsäuren, hergestellt durch Fällung von Lösungen von Silikaten mit BET-Oberflächen von 20 bis 400 $m^2/g$ in Mengen von 5 bis 150 Gewichtsteilen, bezogen auf 100 Teile Kautschuk, eingesetzt.

Als zusätzliche Füllstoffe können natürlich auch Ruße verwendet werden. Die hierbei zu verwendenden Ruße sind nach dem Flammruß-, Furnace- oder Gasrußverfahrenshergestellt und besitzen BET-Oberflächen von 20 bis 200 $m^2/g$, wie z.B. SAF-, ISAF-, IISAF-, HAF-, FEF- oder GPF-Ruße.

In einer besonders bevorzugten Ausführung werden 10 bis 150 Teile helle Füllstoffe (Kieselsäuren), gegebenenfalls zusammen mit 0 bis 100 Gew.-Teilen Ruß, sowie 0,3 bis 15 Gew.-Teilen einer Verbindung der Formel (I) und 0,1 bis 5 Gew.-% einer Verbindung der Formel (II), jeweils bezogen auf eingesetzten Kautschuk, sowie weitere Kautschukhilfsmittel eingesetzt, ganz besonders bevorzugt ist der Einsatz von 0,3 bis 10 Gew.-% (I) und 0,1 bis 3 Gew.-% (II).

Für die Herstellung erfindungsgemäßer Kautschukvulkanisate eignen sich neben Naturkautschuk auch Synthesekautschuke. Bevorzugte Synthesekautschuke sind beispielsweise bei W. Hofmann, Kautschuktechnologie, Gentner Verlag, Stuttgart 1980, beschrieben. Sie umfassen u.a.

| | |
|---|---|
| BR - | Polybutadien |
| ABR - | Butadien/Acrylsäure-$C_{1-4}$-alkylester-Copolymere |
| CR - | Polychloropren |
| IR - | Polyisopren |
| SBR - | Styrol/Butadien-Copolymerisate mit Styrolgehalten von 1 bis 60, vorzugsweise 20 bis 50 Gew.-% |
| IIR - | Isobutylen/Isopren-Copolymerisate |
| NBR - | Butadien/Acrylnitril-Copolymere mit Acrylnitrilgehalten von 5 bis 60, vorzugsweise 10 bis 50 Gew.-% |
| HNBR - | teilhydrierter oder vollständig hydrierter NBR-Kautschuk |
| EPDM - | Ethylen/Propylen/Dien-Copolymerisate |

sowie Mischungen dieser Kautschuke. Für die Herstellung von Kfz-Reifen sind insbesondere anionisch polymerisierte L-SBR-Kautschuke mit einer Glastemperatur oberhalb von -50°C, die gegebenenfalls mit Silylethern oder anderen funktionellen Gruppen, modifiziert sein können, wie sie z.B. in der EP-A 447 066 beschrieben sind, sowie deren Mischungen mit anderen Dienkautschuken von Interesse.

Die erfindungsgemäßen Kautschukvulkanisate können weitere Kautschukhilfsmittel enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren wie Triethanolamin, Polyethylenglykol, Hexantriol, die in der Gummiindustrie bekannt sind.

Die Kautschukhilfsmittel werden in üblichen Mengen, die sich u.a. nach dem Verwendungszweck richten, eingesetzt. Übliche Mengen sind z.B. Mengen von 0,1 bis 30 Gew.-%, bezogen auf eingesetzten Kautschuk.

Als Vernetzungsmittel werden eingesetzt: Peroxide, Schwefel, Magnesium, Zinkoxid, denen noch die bekannten Vulkanisationsbeschleuniger, wie Mercaptobenzthiazole, -sulfenamide, Thiurame und/oder Thiocarbonate zugesetzt werden können. Bevorzugt ist Schwefel. Die Vernetzungsmittel und Vernetzungsbeschleuniger werden in Mengen von 0,1 bis 10 Gew.-%, bevorzugt 0,1 bis 5 Gew.-%, bezogen auf eingesetzten Kautschuk, eingesetzt.

Die Vulkanisation kann bei Temperaturen von ca. 100 bis 200°C, bevorzugt 130 bis 180°C, gegebenenfalls unter Druck bei 10 bis 200 bar, erfolgen.

Die Abmischung der Kautschuke mit dem Füllstoff und den erfindungsgemäßen Verstärkungsadditiven (I) und (II) kann in üblichen Mischaggregaten, wie Walzen, Innenmischern und Mischextrudern, durchgeführt werden.

Die erfindungsgemäßen Kautschukvulkanisate eignen sich zur Herstellung von Formkörpern, z.B. für die Herstellung von Kabelmänteln, Schläuchen, Treibriemen, Förderbändern, Walzenbelägen, Reifen, Schuhsohlen, Dichtungsringen und Dämpfungselementen.

## Beispiele

### Beispiel 1

Herstellung von 3-Triethoxysilyl-propyl-dithio-benzthiazol

124,5 g (0,375 Mol) 2,2'-Dithio-bisbenzthiazol wurden in 800 ml Chlorbenzol bei 0 bis 10°C mit 26,3 g (0,375 Mol) Chlorgas chloriert. Dann versetzte man mit 196,4 g (0,825 Mol) Mercaptopropyl-triethxysilan, rührte 10 Stunden bei Raumtemperatur nach und gab dann 51,1 g (0,75 Mol) Natriummethylat hinzu. Der Niederschlag wurde abfiltriert und das Filtrat im Hochvakuum (0,1 mm) von allen flüchtigen Bestandteilen befreit. Man erhielt 254 g eines braunen Öls.

$^1$H-NMR ($CDCl_3$): 0,7-0,8 ppm (Multiplett, 2-$CH_2$-Protonen), 1,2-1,3 ppm (Triplett, 9-$CH_3$-Protonen), 1,8-2,0 ppm (Multiplett, 2-$CH_2$-Protonen), 2,9-3,1 ppm (Triplett, 2-$CH_2$-Protonen), 3,7-3,9 ppm (Quartett, 6-$CH_2$-Protonen), 7,2-7,9 ppm (Multiplett, 4 aromatische Protonen).

Die folgende Mischung wurde im Kneter bei 150°C Innentemperatur hergestellt. Schwefel und Beschleuniger wurden auf der Walze bei 50°C nachgemischt. Zur Vulkanisation wurden die Mischungen in beheizbaren Pressen 25 Minuten lang auf 160°C erhitzt:

Tabelle

| | Vergl.1 | Vergl.2 | Vergl.3 | Vergl.4 | Vergl.5 | Bsp.A | Bsp.B | Bsp.C |
|---|---|---|---|---|---|---|---|---|
| E-SBR (Buna EM 1500) | 70 | | | | | | | |
| E-SBR (Buna EM 1778) | 41 | | | | | | | |
| Kieselsäure (Vulkasil S) | 50 | | | | | | | |
| Zinkoxid | 3 | | | | | | | |
| Stearinsäure | 2 | | | | | | | |
| Diethylenglykol | 1,5 | | | | | | | |
| Cumaronharz | 5 | | | | | | | |
| Dioctyliertes Diphenylamin | 1 | | | | | | | |
| Bis-(triethoxysilylpropyl)tetrasulfid (DE 2 255 577) | 3,5 | 3,5 | - | - | - | - | - | - |
| Silan-Verb. 2 der EP 447 066 | - | - | - | 3,5 | 3,5 | | | |
| Verbindung gem. Bsp. 1 | - | - | 3,5 | - | - | 3,5 | 3,5 | 3,5 |
| Diphenylguanidin | - | 1,5 | - | - | 1,0 | 1,5 | 1,0 | 0,5 |
| Cyclohexyl-mercaptobenzthiazolsulfenamid | 1,5 | - | 1,5 | - | - | - | - | - |
| Tetramethylthiuramdisulfid | 0,1 | | | | | | | |
| Schwefel | 2 | | | | | | | |
| Vulkanisationskinetik (160°C) t-s (min) | 7,7 | 3,8 | 11,2 | 4,0 | 2,8 | 6,3 | 5,6 | 6,3 |
| t-90 (min) | 19,9 | 20,6 | 25,9 | 15,7 | 10,7 | 13,8 | 11,5 | 13,6 |
| Modul bei 300 % Dehnung (MPa) | 7,21 | 3,89 | 7,61 | | | 8,09 | 8,25 | 7,21 |
| Festigkeit (MPa) | 16,6 | 21,7 | 15,0 | | | 15,5 | 16,7 | 17,9 |
| Dehnbarkeit (%) | 534 | 760 | 489 | | | 482 | 502 | 559 |
| Härte (Shore A/23°C) | 65 | 62 | 65 | | | 66 | 66 | 65 |
| Elastizität (%/70°C) | 60 | 53 | 59 | | | 59 | 60 | 58 |
| Abrieb (DIN 53 516) | 134 | 133 | 122 | | | 123 | 122 | 122 |

Es wird ersichtlich, daß die Kautschukmischungen mit den erfindungsgemäßen Additivkombinationen (Bsp. A, B, C) eine deutlich höhere Vulkanisationsgeschwindigkeit besitzen (gemessen als t-90 = Zeit bis zum Erreichen von 90 % des Endpunktes der Vernetzung in Minuten). Die Zeit bis zur beginnenden Vernetzung (t-s in Minuten) liegt dagegen auf einem sehr hohen Niveau.

Es wird ferner ersichtlich, daß die Kombination einer Verbindung des Typs (II) (Diphenylguanidin) mit Bis-(triethoxysilyl-propyl)tetrasulfid (Vergleich 2) nur Nachteile gegenüber der Kombination mit Sulfenamid-Beschleuniger bringt (verkürzte Zeit bis zur beginnenden Vernetzung, kein positiver Einfluß auf die Geschwindigkeit der Vulkanisation; geringere Vernetzungsdichte, festgestellt im geringeren Modul 300 und geringerer Härte). Und schließlich geht aus Vergleich 4 hervor, daß das mit Verbindungen (I) strukturell verwandte Silan-2 der EP 447 066 ein deutlich ungünstigeres Anvulkanisationsverhalten als die erfindungsgemäße Kombination bewirkt. Die Kombination mit einer Verbindung der Struktur (II) (Diphenylguanidin) führt zu einer weiteren, nicht tolerierbaren, Verkürzung der Anvulkanisationszeit (Vergleich 5).

## Patentansprüche

1. Kautschukmischungen enthaltend mindestens einen Kautschuk, einen Vernetzer, einen Kieselsäure enthaltenden Füllstoff, gegebenenfalls weitere Kautschukhilfsmittel sowie mindestens eine der Verbindungen der Formel (I) und (II):

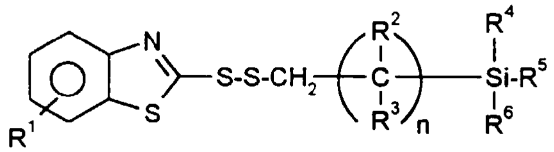

(I),

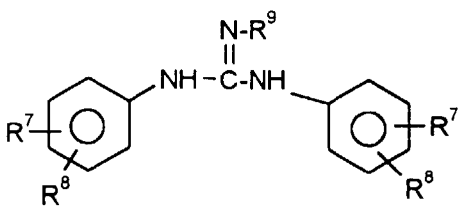

(II),

worin

| | |
|---|---|
| $R^1$ | Wasserstoff oder $C_1$-$C_8$-Alkyl, bevorzugt $C_1$-$C_4$-Alkyl bedeutet, |
| $R^2$ und $R^3$ | gleich oder verschieden sind und für Wasserstoff, $C_1$-$C_{12}$-, bevorzugt $C_1$-$C_6$-Alkyl, -Alkenyl oder -Cycloalkyl oder $C_6$-$C_{12}$-, bevorzugt $C_6$-$C_{10}$-Aryl, die gegebenenfalls mit Hydroxyl-, Carboxyl- oder Carboxy-$C_1$-$C_8$-alkylresten ein- oder mehrfach substituiert sein können, stehen, |
| $R^4$, $R^5$ und $R^6$ | gleich oder verschieden sind und $C_1$-$C_{18}$-, bevorzugt $C_1$-$C_6$-Alkyl, -Alkenyl oder -Cycloalkyl, O-$C_1$-$C_{12}$-, bevorzugt O-$C_1$-$C_6$-Alkyl, O-$C_6$-$C_{12}$-, bevorzugt O-$C_6$-$C_{10}$-Aryl, die durch O-$C_1$-$C_8$-Alkylreste ein- oder mehrfach substituiert sein können, bedeuten, mit der Maßgabe, daß mindestens einer der Reste $R^4$, $R^5$ und $R^6$ eine O-$C_1$-$C_{12}$-Alkyl- oder O-$C_6$-$C_{12}$-Arylgruppe darstellt, |
| n | für eine ganze Zahl von 0 bis 8, bevorzugt 0 bis 4 steht, |
| $R^7$, $R^8$ und $R^9$ | gleich oder verschieden sind und Wasserstoff, $C_1$-$C_{12}$-, bevorzugt $C_1$-$C_6$-Alkyl oder $C_6$-$C_{12}$-, bevorzugt $C_6$-$C_{10}$-Aryl bedeuten, |

wobei die Verbindung (I) in Mengen von 0,1 bis 15 Gew.-% und die Verbindung (II) in Mengen von 0,05 bis 5 Gew.-%, bezogen auf die Menge des jeweils eingesetzten Kautschuks, eingesetzt wird.

2. Verwendung der Kautschukmischungen gemäß Anspruch 1 zur Herstellung von Kautschukvulkanisaten.

## Revendications

1. Mélanges de caoutchoucs contenant au moins un caoutchouc, un 5 réticulant, une charge contenant de l'acide silicique, éventuellement d'autres adjuvants pour le caoutchouc et au moins l'un des composés des formules (I) et (II) :

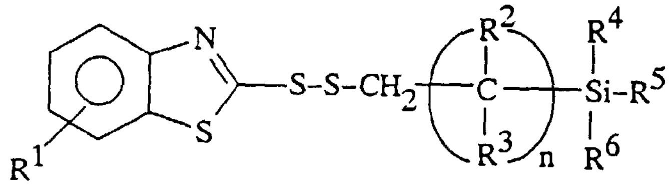

(I),

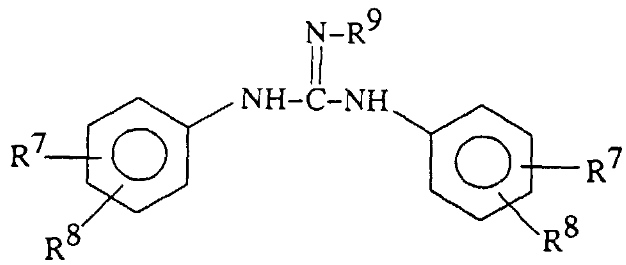

(II),

où

| | |
|---|---|
| $R^1$ | représente l'hydrogène ou un alkyle en $C_1$-$C_8$, de préférence un alkyle en $C_1$-$C_4$, |
| $R^2$ et $R^3$ | sont identiques ou différents et représentent l'hydrogène, un alkyle, alcényle ou cycloalkyle en $C_1$-$C_{12}$, de préférence en $C_1$-$C_6$, ou un aryle en $C_6$-$C_{12}$, de préférence en $C_6$-$C_{10}$, qui peuvent éventuellement être substitués une ou plusieurs fois par des restes hydroxyle, carboxyle ou carboxy-alkyle en $C_1$-$C_8$, |
| $R^4$, $R^5$ et $R^6$ | sont identiques ou différents et représentent un alkyle, alcényle ou cycloalkyle en $C_1$-$C_{18}$, de préférence en $C_1$-$C_6$, un O-alkyle en $C_1$-$C_{12}$, de préférence en $C_1$-$C_6$, un O-aryle en $C_6$-$C_{12}$, de préférence en $C_6$-$C_{10}$, qui peuvent être substitués une ou plusieurs fois par des restes O-alkyle en $C_1$-$C_8$, à condition qu'au moins l'un des restes $R^4$, $R^5$ et $R^6$ représente un groupe O-alkyle en $C_1$-$C_{12}$ ou O-aryle en $C_6$-$C_{12}$, |
| n | représente un nombre entier de 0 à 8, de préférence de 0 à 4, |
| $R^7$, $R^8$ et $R^9$ | sont identiques ou différents et représentent l'hydrogène, un alkyle en $C_1$-$C_{12}$, de préférence en $C_1$-$C_6$, ou un aryle en $C_6$-$C_{12}$, de préférence en $C_6$-$C_{10}$, |

le composé (I) étant utilisé en des quantités de 0,1 à 15 % en masse et le composé (II) étant utilisé en des quantités de 0,05 à 5 % en masse, par rapport à la quantité du caoutchouc utilisé dans chaque cas.

2. Utilisation des mélanges de caoutchoucs selon la revendication 1 pour la fabrication de produits de vulcanisation de caoutchouc.

## Claims

1. Rubber mixtures containing at least one rubber, a cross-linking agent, a filler containing silica, optionally other rubber auxiliaries and at least one of the compounds corresponding to formulae (I) and (II)

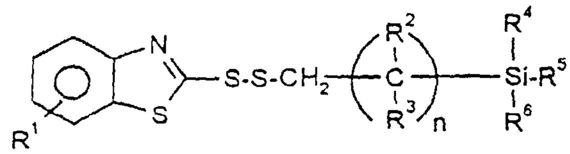 (I),

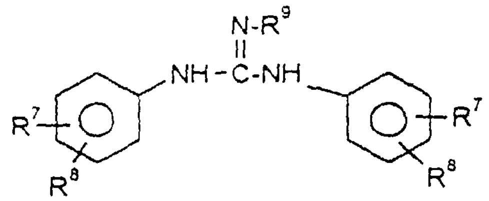 (II),

wherein

| | |
|---|---|
| $R^1$ | denotes hydrogen or $C_1$-$C_8$-alkyl, preferably $C_1$-$C_4$-alkyl, |
| $R^2$ and $R^3$ | are the same or different and represent hydrogen, $C_1$-$C_{12}$-, preferably $C_1$-$C_6$-alkyl, -alkenyl or -cycloalkyl or $C_6$-$C_{12}$-, preferably $C_6$-$C_{10}$-aryl, which may optionally be singly or multiply substituted by hydroxyl, carboxyl or carboxy-$C_1$-$C_8$-alkyl groups, |
| $R^4$, $R^5$ and $R^6$ | are the same or different and denote $C_1$-$C_{18}$-, preferably $C_1$-$C_6$-alkyl, -alkenyl or -cycloalkyl, O-$C_1$-$C_{12}$-, preferably O-$C_1$-$C_6$-alkyl, O-$C_6$-$C_{12}$-, preferably O-$C_6$-$C_{12}$-aryl, which may be singly or multiply substituted by O-$C_1$-$C_8$- alkyl groups, with the proviso that at least one of the groups $R^4$, $R^5$ and $R^6$ is an O-$C_1$-$C_{12}$-alkyl or O-$C_6$-$C_{12}$-aryl group, |
| n | is an integer from 0 to 8, preferably 0 to 4, |
| $R^7$, $R^8$ and $R^9$ | are the same or different and denote hydrogen, $C_1$-$C_{12}$-, preferably $C_1$-$C_6$-alkyl or $C_6$-$C_{12}$-, preferably $C_6$-$C_{10}$-aryl, |

compound (I) being used in quantities of from 0.1 to 15 wt.% and compound (II) being used in quantities of from 0.05 to 5 wt.%, based on the quantity of the rubber used in each case.

**2.** The use of the rubber mixtures according to claim 1 for the production of rubber vulcanisates.